# FASCICULE DE BREVET EUROPEEN

(11) **EP 3 123 013 B1**
(45) Date de publication et mention de la délivrance du brevet: **02.05.2018**
(21) Numéro de dépôt: 15714880.0
(22) Date de dépôt: 19.03.2015
(51) Int. Cl.: F02C 6/20, F02N 11/08, F02C 7/268

(54) **PROCÉDÉ ET SYSTÈME DE RÉACTIVATION RAPIDE DE TURBOMACHINE**
TURBINENMOTORSCHNELLREAKTIVIERUNGSVERFAHREN UND -SYSTEM
TURBINE ENGINE RAPID REACTIVATION METHOD AND SYSTEM

(30) Priorité: 27.03.2014 FR 1452628
(43) Date de publication de la demande: 01.02.2017
(73) Titulaire: Safran Helicopter Engines, 64510 Bordes (FR)
(72) Inventeur: KLONOWSKI, Thomas, F-64160 Sedzere (FR); BAZET, Jean-Michel, F-64110 Gelos (FR); POUMAREDE, Vincent, F-65000 Tarbes (FR); HARRIET, Pierre, F-64140 Billere (FR)
(74) Mandataire: David, Alain
(86) Numéro de dépôt international: PCT/FR2015/050675
(87) Numéro de publication internationale: WO 2015/145031

(56) Documents cités:
- EP-A2- 2 581 586
- FR-A1- 2 668 865
- FR-A1- 2 947 006
- US-A- 5 157 267
- US-A- 6 134 875
- US-A1- 2010 244 459

## Description

### Domaine technique et état de l'art antérieur

L'invention concerne un procédé et un système de réactivation rapide d'une turbomachine.

Le domaine d'application de l'invention est plus particulièrement celui de la commande du démarrage de moteurs aéronautiques de propulsion à turbine à gaz, tels que des turbomoteurs d'hélicoptère ou des turbopropulseurs d'aéronefs à aile fixe.

Un turbomoteur d'aéronef comprend de manière connue une chambre de combustion, un arbre de compresseur sur lequel est montée une roue de compresseur pour alimenter en air comprimé ladite chambre de combustion et au moins un démarreur ou un générateur-démarreur relié audit arbre de manière à lui fournir le couple de démarrage suffisant pour l'entraîner en rotation.

Pour démarrer le turbomoteur, le démarreur accélère tout d'abord l'arbre de compresseur dans une première phase de démarrage pendant laquelle le circuit carburant en amont des injecteurs de démarrage est mis en pression et purgé. Puis, dans une deuxième phase de démarrage, une injection de combustible est initiée avant que l'allumage dudit combustible ne soit réalisé dans la chambre de combustion du turbomoteur. Enfin, dans une troisième phase de démarrage, à une vitesse de rotation prédéfinie, l'action du démarreur est arrêtée et le turbomoteur peut continuer d'accélérer grâce à la combustion dudit combustible.

Pour permettre l'allumage du combustible, l'air fourni par la roue de compresseur à la chambre de combustion doit respecter certaines conditions de pression et de vitesse au niveau des injecteurs de combustible, de manière à garantir un ratio carburant / air précis et à ne pas souffler la flamme. Or, le volume d'air fourni par la roue de compresseur à la chambre de combustion étant proportionnel à la vitesse de rotation de l'arbre de compresseur, la vitesse de rotation de l'arbre du générateur de gaz doit donc être comprise dans un intervalle de vitesse, appelé fenêtre d'allumage, et ce pendant un temps suffisamment long pour que l'allumage soit réalisé correctement.

Traditionnellement, les turbomoteurs de la quasi-totalité des hélicoptères légers ou moyens, et même ceux de certains hélicoptères lourds ainsi que de nombreux turbopropulseurs d'avions légers à aile fixe, sont démarrés à l'aide d'un démarreur ou d'un générateur-démarreur à courant continu alimenté sous une tension continue de 28V.

L'invention s'applique plus particulièrement aux hélicoptères équipés d'au moins deux turbomoteurs. Chaque turbomoteur est conçu de manière surdimensionnée pour pouvoir maintenir l'hélicoptère en vol en cas de panne de l'autre moteur. Ces turbomoteurs surdimensionnés fonctionnent la plupart du temps à charge partielle, la puissance nécessaire pour maintenir l'hélicoptère en vol de croisière étant relativement faible. Ce fonctionnement est donc pénalisant en consommation de carburant. C'est pourquoi afin de réduire cette consommation en régime de croisière, il est possible d'arrêter l'un des turbomoteurs. Le moteur actif fonctionne alors à un régime de puissance plus élevé et donc à un niveau de consommation spécifique (Cs) plus favorable.

Des systèmes de régulation pour l'optimisation de la consommation spécifique sont décrits notamment dans les documents FR 2967132 A1 et FR 2967133 A1. Selon ces documents, sur un hélicoptère bimoteur en vol de croisière économique, c'est-à-dire se trouvant dans une phase de vol caractérisée par une puissance demandée à chaque moteur assez faible, typiquement de l'ordre de 50% à 60% de la puissance maximale continue, en abrégé PMC (initiales de « Puissance Maximale Continue »), se traduisant par une consommation spécifique très élevée, on met en veille (chambre allumée ou éteinte - vireur) une des deux turbines, de telle manière que l'autre moteur fonctionne à régime élevé et bénéficie de ce fait d'une consommation spécifique beaucoup plus faible. Dans ce cas il convient toutefois, pour respecter la sécurité, de pouvoir effectuer de façon simple et fiable, sur un hélicoptère bimoteur, le mode de réactivation rapide d'un moteur depuis un mode de veille.

On a par ailleurs déjà proposé par exemple dans le document EP 2264297 A en liaison avec un turbomoteur équipé d'un générateur-démarreur à 28V accouplé au générateur de gaz, d'assister le démarrage par un système d'appoint composé d'un banc de super-capacités, qui est connecté en parallèle avec la batterie de 28V de l'hélicoptère. Toutefois, ce système présente des inconvénients dans la mesure où le niveau de tension utilisé est fixe, n'est pas adapté à une réactivation rapide et la machine électrique constituée par le générateur-démarreur ne peut pas délivrer la puissance nécessaire à la fonction démarrage rapide durant toute la phase transitoire. Par ailleurs, l'architecture connue proposée ne vise qu'à permettre un démarrage de générateur de gaz à l'arrêt.

Le document EP 2581586 A décrit un système de démarrage de moteurs d'hélicoptère, dans lequel on met en oeuvre des sources d'énergie électrique à base d'une technologie de batterie traditionnelle d'hélicoptère pour le démarrage normal et on met en oeuvre en complément des systèmes de stockage électrique de type super-capacités (EDLC). La tension nominale est celle du réseau de bord, à savoir 28V en courant continu. De ce fait, le démarreur est utilisé dans son mode nominal et la performance de démarrage est obtenue en faisant varier les caractéristiques électriques de la source : durant un démarrage normal, la batterie traditionnelle d'hélicoptère est connectée au démarreur et durant un démarrage rapide, le second dispositif comprenant les systèmes de stockage de type super-capacité est connecté au démarreur. Il s'ensuit que dans tous les cas le niveau de tension utilisé reste celui (par exemple 28V) des batteries traditionnelles d'hélicoptère et pour cette tension, la machine électrique constituée par le démarreur ne peut pas délivrer la puissance nécessaire à la fonction démarrage rapide (réactivation d'urgence) durant toute la phase transitoire.

Un système permettant de rendre plus robuste l'allumage et le démarrage des turbomoteurs, y compris en mode de veille, est donc souhaitable mais, s'il est réalisé de façon classique, nécessitera un convertisseur continu-continu imposant, puisqu'il devra être dimensionné pour des courants très importants pouvant dépasser le millier d'ampères.

### Définition et objet de l'invention

L'invention vise à remédier aux inconvénients précités et à permettre notamment de réaliser, sur un hélicoptère bimoteur, une fonction de redémarrage d'urgence (réactivation rapide) de l'un des moteurs depuis un mode de veille.

L'invention vise plus particulièrement à proposer une architecture électrique d'un système de démarrage de turbomoteur qui constitue un dispositif d'hybridation électrique répondant notamment aux objectifs suivants :
- Etre capable de remplir les fonctions classiques d'un démarreur, c'est-à-dire assurer le démarrage normal du turbomoteur et la ventilation sèche,
- Etre capable des performances requises pour réaliser les fonctions de réactivation d'urgence, étant donné que les caractéristiques électriques (tension, impédance) des éléments générateurs du réseau de bord de l'aéronef - batterie, génératrice ou alternateur - sont dimensionnés pour assurer le démarrage normal des turbomachines, mais sont généralement insuffisantes pour délivrer le niveau de courant nécessaire à l'obtention du couple de démarrage ponctuel mais notablement plus élevé qui caractérise une réactivation d'urgence,

- Minimiser les contraintes électriques et les impacts sur le réseau de bord hélicoptère : génération, distribution, batterie,...,
- Etre le plus léger et le plus optimal possible,
- Pouvoir le cas échéant être intégré facilement sur des turbines existantes et être donc compatible avec les générateurs/démarreurs à balais « conventionnels ».

Pour résoudre les problèmes mentionnés ci-dessus, il est proposé un aéronef comprenant une turbomachine ayant un système de réactivation rapide, comprenant une machine électrique alimentée en courant continu à partir d'un réseau de bord d'alimentation électrique inclus dans ledit aéronef, caractérisé en ce qu'il comprend en outre un interrupteur interposé entre le réseau de bord d'alimentation électrique et la machine électrique, ledit interrupteur étant ouvert pour assurer l'isolement de la machine électrique par rapport au réseau de bord d'alimentation électrique lorsque la réactivation d'urgence est sélectionnée, un ensemble additionnel comprenant une pluralité N d'éléments de stockage d'énergie électrique et une unité de commande adaptée pour commander un dispositif de décharge des éléments de stockage d'énergie électrique, le dispositif de décharge des éléments de stockage d'énergie électrique étant incorporé dans l'aéronef et adapté pour permettre la mise en parallèle avec le réseau de bord d'alimentation électrique d'un circuit série comprenant une partie au moins des N éléments de stockage d'énergie électrique,), la tension aux bornes de la machine électrique étant configurée par commutation séquentielle du nombre des N éléments de stockage pour accompagner l'augmentation de la force contre-électromotrice de la machine électrique au fur et à mesure de l'augmentation de la vitesse du générateur de gaz associé à la turbomachine, de telle sorte que lorsque le système de réactivation rapide est en service, la machine électrique soit alimentée par un niveau de tension au-dessus de celui de ses caractéristiques nominales.

Avantageusement, les éléments de stockage ont une impédance de source plus faible et une densité de puissance supérieure à celles du réseau de bord d'alimentation électrique, de manière à être compatibles avec les niveaux élevés de couple et donc de courant exigés par une réactivation d'urgence de la turbomachine.

Les éléments de stockage peuvent être de type super capacité (EDLC).

Les éléments de stockage peuvent encore être de type condensateur hybride (LIC).

Selon un mode particulier de réalisation de l'invention, l'unité de commande est associée à un dispositif de charge et d'équilibrage et à l'interrupteur pour commander la charge des éléments de stockage à partir de la machine électrique fonctionnant en générateur électrique, en dehors des périodes de réactivation rapide.

Selon un autre mode particulier de réalisation de l'invention, l'unité de commande est associée à un dispositif de charge et d'équilibrage pour commander la charge des éléments de stockage à partir du réseau de bord d'alimentation électrique en dehors des périodes de réactivation rapide.

Le système de démarrage selon l'invention est avantageusement appliqué à une turbomachine d'un hélicoptère bimoteur.

L'invention concerne également un procédé de réactivation rapide pour une turbomachine d'aéronef comprenant une machine électrique, alimentée en courant continu à partir d'un réseau de bord d'alimentation électrique inclus dans l'aéronef, caractérisé en ce que le procédé comprend les étapes consistant à interrompre de façon sélective la liaison électrique entre ledit réseau de bord d'alimentation électrique et ladite machine électrique à l'aide d'un interrupteur qui est en position ouverte pour assurer l'isolement de la machine électrique par rapport au réseau de bord d'alimentation électrique lorsque la réactivation d'urgence est sélectionnée, et assurer à l'aide d'une unité de commande et d'un dispositif de décharge des éléments de stockage la mise en parallèle avec le réseau de bord d'alimentation électrique d'un circuit série comprenant une partie au moins de N éléments de stockage d'énergie électrique, la tension aux bornes de la machine électrique étant configurée par commutation séquentielle du nombre des N éléments de stockage pour accompagner l'augmentation de la force contre-électromotrice de la machine électrique au fur et à mesure de l'augmentation de la vitesse du générateur de gaz associé à la turbomachine, de telle sorte que, lorsque le système de réactivation rapide est en service, la machine électrique soit alimentée par un niveau de tension au-dessus de celui de ses caractéristiques nominales.

Le réseau de bord d'alimentation électrique peut comprendre un alternateur ou une génératrice de courant, ou peut être raccordé à une prise de parc (quand l'aéronef est au sol) ou encore peut être branché sur une batterie d'accumulateur, par exemple de 28V.

Selon un mode particulier de réalisation, le procédé de démarrage selon l'invention comprend en outre une étape de commande de la charge des éléments de stockage, par un dispositif de charge et d'équilibrage, à partir du réseau de bord d'alimentation électrique, en dehors des périodes de réactivation rapide.

Selon un autre mode particulier de réalisation, le procédé de démarrage selon l'invention comprend en outre une étape de commande de la charge des éléments de stockage, par un dispositif de charge et d'équilibrage, et de l'interrupteur, à partir de la machine électrique fonctionnant en générateur électrique, en dehors des périodes de réactivation rapide.

L'invention s'applique tout particulièrement aux systèmes de démarrage de turbomoteurs d'aéronefs et notamment d'hélicoptères.

### Brève description des dessins

D'autres caractéristiques et avantages de l'invention ressortiront de la description suivante de modes particuliers de réalisation, donnés à titre d'exemples, en référence aux dessins annexés, sur lesquels :
La figure 1 est une vue schématique d'ensemble d'un exemple de réalisation d'un dispositif de réactivation rapide de turbomachine conformément à l'invention,
Les figures 2A à 2C représentent les signaux de commande de commutateurs pour effectuer la décharge d'éléments de stockage d'énergie électrique dans le cadre d'un dispositif de réactivation rapide de turbomachine conformément à l'invention,
La figure 3 est un diagramme montrant un exemple d'évolution en fonction du temps de la vitesse ou de la fcém d'une machine électrique commandée conformément à l'invention,
La figure 4 est un diagramme montrant un exemple d'évolution en fonction du temps de l'intensité du courant d'une machine électrique commandée conformément à l'invention,
La figure 5 est un diagramme montrant un exemple d'évolution en fonction du temps de la tension appliquée à une machine électrique commandée conformément à l'invention,
La figure 6 est un premier exemple de réalisation d'un dispositif d'équilibrage et de charge de cellules de stockage d'énergie électrique pouvant être mis en oeuvre dans le dispositif de réactivation rapide de turbomachine conforme à l'invention, et
La figure 7 est un deuxième exemple de réalisation d'un dispositif d'équilibrage et de charge de cellules de stockage d'énergie électrique pouvant être mis en oeuvre dans le dispositif de réactivation rapide de turbomachine conforme à l'invention.

### Description détaillée de modes de réalisation préférentiels

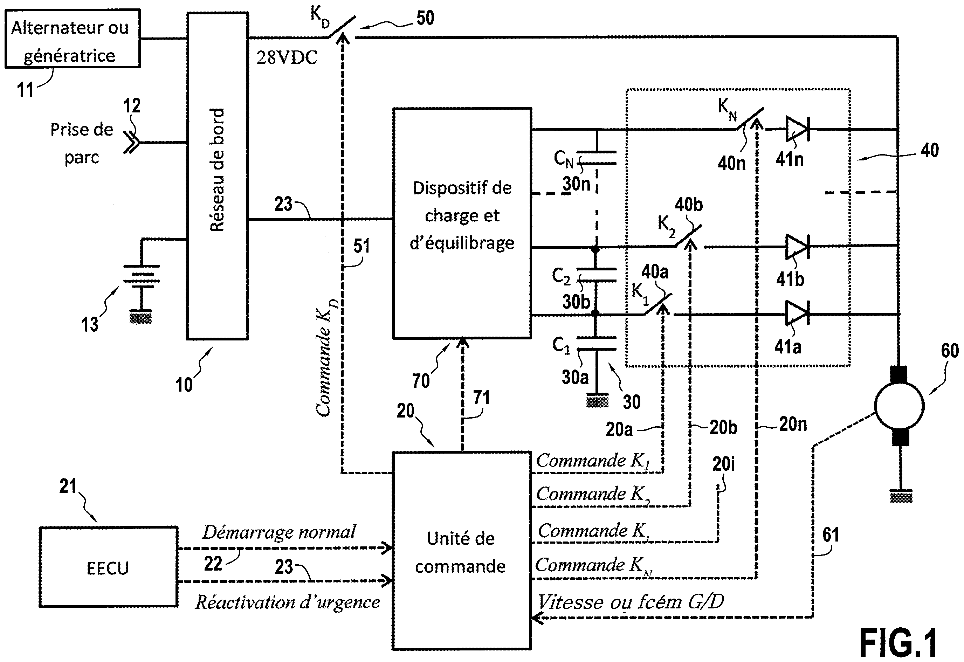

En figure 1, on a représenté schématiquement la configuration générale d'un dispositif selon l'invention.

Le système de redémarrage d'urgence, c'est-à dire de réactivation rapide d'une turbomachine mise en veille, comprend un réseau de bord d'alimentation électrique 10, qui comprend entre autres, une batterie d'accumulateurs 13, qui peut être une batterie unique ou un groupe de batteries et peut être constituée par l'alimentation classique d'un réseau de bord d'un aéronef, par exemple à une tension de 28V, mais l'invention n'est pas limitée à une telle valeur.

Le réseau de bord d'alimentation électrique 10 peut être encore associé à un alternateur ou une génératrice de courant 11, ou peut être raccordé à une prise de parc 12 (quand l'aéronef est au sol) en plus du fait de pouvoir être branché sur une batterie d'accumulateur 13, par exemple de 28V.

Une machine électrique 60 peut être constituée par un simple démarreur à courant continu ou par un générateur-démarreur (GD) capable de fonctionner non seulement en mode moteur, mais également en mode générateur lorsque la phase de démarrage est terminée, par exemple afin d'alimenter le réseau de bord 10. Dans la suite de la description, le terme « démarreur » désigne indifféremment un simple démarreur et un générateur-démarreur, sauf indication contraire.

On n'a pas représenté sur la figure 1 les éléments principaux de la turbomachine qui sont classiques et peuvent comprendre un générateur de gaz comprenant lui-même un compresseur, une chambre de combustion et une turbine haute pression, ainsi qu'une turbine libre et des accessoires de démarrage. On n'a également pas représenté sur la figure 1 un capteur de la vitesse de rotation du démarreur, ni un capteur de la vitesse de rotation de l'arbre du compresseur de la turbomachine. On a cependant représenté de façon schématique une ligne 61 transmettant à l'unité de commande 20 une information de vitesse ou de fcém (force contre-électromotrice) de la machine électrique 60 pouvant être constituée par un démarreur ou un générateur-démarreur.

Le système de démarrage selon l'invention comprend une unité de commande 20. On n'a pas représenté sur la Figure 1 les divers capteurs de mesure du fonctionnement de la turbomachine, tels que des capteurs de température, permettant de connaître notamment l'état de fonctionnement dans la chambre de combustion.

L'unité de commande 20, qui peut être associée au calculateur électronique 21 traditionnel de la turbomachine, encore dénommé EECU (à partir de l'expression anglaise « Engine Electronic Control Unit »), ou peut être directement intégrée dans celui-ci, assure la gestion des mesures fournies par les capteurs et la commande du système de démarrage à partir du module de gestion du réseau de bord d'un aéronef. L'unité de commande 20 est adaptée pour recevoir une commande de démarrage normal (ligne 22) ou une commande de réactivation d'urgence (ligne 23).

Le dispositif de démarrage selon l'invention comprend en outre un interrupteur 50 (K_{D}) interposé entre le réseau de bord 10 et la machine électrique 60, un ensemble 30 de N éléments de stockage d'énergie électrique 30a, ..., 30n (condensateurs de capacité C₁, C₂, ...C_{N}) et un dispositif de décharge des éléments de stockage 40 recevant des signaux de commande K₁, K₂ ...Kᵢ,..., Kₙ par des lignes 20a, 20b, ...20i,...20n depuis l'unité de commande 20.

L'unité de commande 20 commande l'interrupteur 50 par une ligne 51 (commande K_{D}), ainsi qu'un ensemble d'autres commutateurs 40a, 40b,...,40n du dispositif 40 des éléments de stockage (commandes K₁, K₂ ..K_{N}) permettant la mise en parallèle avec le réseau de bord d'alimentation électrique 10 d'un circuit série comprenant tout ou partie des N éléments de stockage d'énergie électrique 30a,..., 30n afin de fournir l'énergie nécessaire au redémarrage d'urgence qui constitue une réactivation rapide de la turbine précédemment mise en veille. Des diodes 41a, 41b, ..., 41n sont montées en série avec les commutateurs 40a, 40b, ..., 40n.

Le système selon l'invention, grâce aux sous-ensembles additionnels 20, 30, 40, 50, 70 permet de configurer la source de tension destinée à alimenter la machine électrique 60 de telle sorte que, lorsque le système de réactivation rapide est en fonction « réactivation d'urgence », on applique un niveau de tension aux bornes de la machine électrique 60 qui est au-dessus de celui des caractéristiques nominales de cette machine électrique 60, afin de pouvoir augmenter le couple mécanique transitoire fourni, tout en appliquant la tension de manière graduelle afin de limiter le courant d'appel au début de la réactivation d'urgence et d'accompagner l'augmentation de la fcém du démarreur au fur-et-à-mesure de la montée en vitesse du générateur de gaz.

Les éléments de stockage 30a,..., 30n ont une impédance de source plus faible et une densité de puissance supérieure à celles des éléments de stockage du réseau de bord d'alimentation électrique 10 et sont donc adaptés à la fourniture d'un courant de démarrage élevé pendant la durée brève d'une réactivation d'urgence.

Les éléments de stockage additionnels 30a,..., 30n peuvent être notamment constitués par des super-capacités (EDLC) ou par des condensateurs hybrides (LIC).

On décrira maintenant de façon plus détaillée le fonctionnement du système de démarrage selon l'invention.

Lorsque l'on sélectionne le démarrage normal, par exemple alors que l'aéronef est au sol et que la turbomachine est initialement à l'arrêt, l'EECU 21 transmet la commande de démarrage normal par la ligne 22 à l'unité de commande 20, laquelle provoque la fermeture de l'interrupteur 50 par la ligne de commande 51. Le démarreur 60 est alors alimenté directement par le réseau de bord 10 et applique au générateur de gaz de la turbomachine un couple de démarrage. De manière connue, le niveau de tension et l'impédance des éléments générateurs du réseau de bord 10 sont adaptés à la fourniture du courant modéré nécessaire à un démarrage normal de la turbomachine. La même procédure est également utilisée en vol pour la réactivation normale d'une turbomachine préalablement mise en veille, lorsque le redémarrage ne présente pas de caractère d'urgence.

Lorsque l'on sélectionne le démarrage d'urgence, alors que l'aéronef est en vol et que la turbomachine est initialement en mode de veille, l'EECU 21 transmet la commande de réactivation d'urgence par la ligne 23 à l'unité de commande 20 qui assure les fonctions suivantes :
- commande de l'ouverture de l'interrupteur 50 qui assure l'isolement de la machine électrique 60 par rapport au réseau de bord 10,
- configuration de la tension aux bornes de la machine électrique 60 par commutation séquentielle du nombre d'éléments de stockage 30a,..., 30n nécessaires au sein de l'ensemble 30 pour, d'une part, gérer le courant fourni à la machine électrique 60 afin de permettre d'obtenir un couple mécanique notablement supérieur au couple de démarrage normal et, d'autre part, accompagner l'augmentation de la fcém de la machine électrique 60 au fur-et-à mesure de l'augmentation de la vitesse du générateur de gaz.

Les combinaisons de fermeture des contacteurs 40a, 40b, ..., 40n peuvent être différentes en fonction de la nature des éléments de stockage 30a, 30b, ..., 30n, ainsi que des caractéristiques de la machine électrique 60.

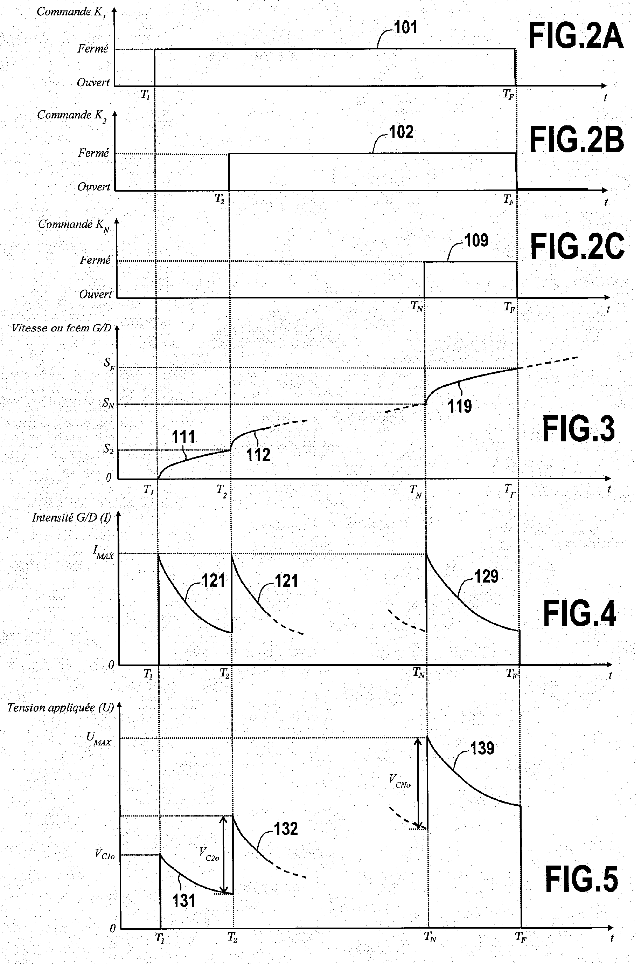

On a représenté sur les figures 2A à 2C et 3 à 5 un exemple illustrant une chronologie de la commande des interrupteurs 40a à 40n (commandes K₁ à K_{N}) qui permet de limiter le courant et donc le couple dans la machine pendant les premières phases du démarrage d'urgence tout en continuant à augmenter sa vitesse en fin de démarrage où la machine électrique 60 sera soumise à une tension de fonctionnement supérieure à son point de fonctionnement nominal.

De façon plus particulière, sur la figure 2A on voit un signal 101 correspondant à une commande K₁ qui assure la fermeture du contacteur 40a entre un instant initial T₁ et un instant final T_{F}.

Sur la figure 2B on voit un signal 102 correspondant à une commande K₂ qui assure la fermeture du contacteur 40b entre un instant initial T₂, postérieur à l'instant initial T₁ et un instant final T_{F}.

Sur la figure 2C on voit un signal 109 correspondant à une commande K_{N} qui assure la fermeture du dernier contacteur 40n entre un instant initial T_{N}, postérieur à l'ensemble des instants initiaux T₁, T₂,... et un instant final T_{F}.

On comprend d'après les figures 2A, 2B et 2C qu'une commande échelonnée des contacteurs 40a, 40b,...40n permet de connecter successivement les éléments de stockage 30a, 30b,... 30n en série, et d'appliquer la somme des tensions résultante à l'enroulement d'induit de la machine électrique 60.

La figure 3 montre l'évolution en fonction du temps de la vitesse ou de la fcém de la machine électrique 60 commandée conformément à la séquence des figures 2A à 2C. La courbe d'évolution comprend un premier tronçon 111 évoluant entre les instants T₁ et T₂ entre des seuils S₁ (égal à zéro) et S₂, puis des tronçons successifs 112, ... évoluant entre les instants T₂ et T_{N} entre des seuils S₂ et S_{N}, puis enfin un dernier tronçon 119 évoluant entre l'instant T_{N} et un instant final T_{F} entre le seuil S_{N} et un seuil final S_{F} présentant une valeur maximale.

La figure 4 montre l'évolution en fonction du temps de l'intensité du courant de la machine électrique 60 commandée conformément à la séquence des figures 2A à 2C. A chaque instant initial de l'application d'un signal de commande K₁, K₂, ...K_{N} à des instants successifs T₁, T₂, ..., T_{N}, l'intensité du courant atteint une valeur maximale I_{MAX}, puis décroît (tronçons 121, 122, ..., 129) pour revenir à zéro à l'instant final T_{F}. Une commande adéquate des contacteurs K₁, K₂,... K_{N} permet de limiter le courant maximum absorbé par la machine électrique 60, donc le couple, à un niveau acceptable par la chaîne mécanique d'entraînement du générateur de gaz, tout en conservant pendant toute la séquence d'activation d'urgence un couple moyen élevé.

La figure 5 montre l'évolution en fonction du temps de la tension appliquée à la machine électrique 60 commandée conformément à la séquence des figures 2A à 2C. A chaque instant initial de l'application d'un signal de commande K₁, K₂, ..., K_{N} à des instants successifs T1, T₂, ..., T_{N}, la tension appliquée à la machine électrique 60 augmente d'une valeur V_{C10}, V_{C20}, ..., V_{CN0} égale à la valeur de charge initiale de l'élément de stockage 30a, 30b, ..., 30n, puis décroît (tronçons 131, 132, ..., 139) au fur-et-à-mesure de la décharge des éléments de stockage ainsi connectés en parallèle avec la machine électrique 60, tout en se maintenant à une valeur augmentant progressivement jusqu'à atteindre une valeur U_{MAX} à l'instant initial de la commande K_{N} de fermeture du dernier contacteur 40n. Une commande adéquate des contacteurs K₁, K₂,... K_{N} permet donc d'adapter graduellement le niveau de la tension appliqué à la machine électrique 60 au fur-et-à-mesure de l'augmentation de la vitesse et donc de la fcém de la machine, autorisant le maintien d'un couple de démarrage moyen important sur le générateur de gaz jusqu'à des vitesses élevées. On notera que, bien que le niveau de tension maximal U_{MAX} appliqué à la machine électrique 60 en fin d'activation d'urgence dépasse la tension nominale du réseau de bord, il reste cependant compatible de la tenue des isolants et du collecteur de la machine électrique pour une utilisation exceptionnelle.

Lors du fonctionnement en régime nominal, c'est-à-dire en dehors d'une période d'activation d'urgence, l'unité de commande 20 et le dispositif de charge et d'équilibrage des cellules 70 ont pour fonction complémentaire de charger et maintenir chargés les éléments de stockage 30a,..., 30n de l'ensemble additionnel d'éléments de stockage 30 et d'une manière générale de surveiller ces éléments de stockage 30a à 30n.

La charge des éléments de stockage 30a,..., 30n de l'ensemble additionnel 30 peut se faire à partir du réseau d'alimentation 10 de l'hélicoptère ou à titre de variante, à partir de la machine électrique 60 fonctionnant en générateur électrique.

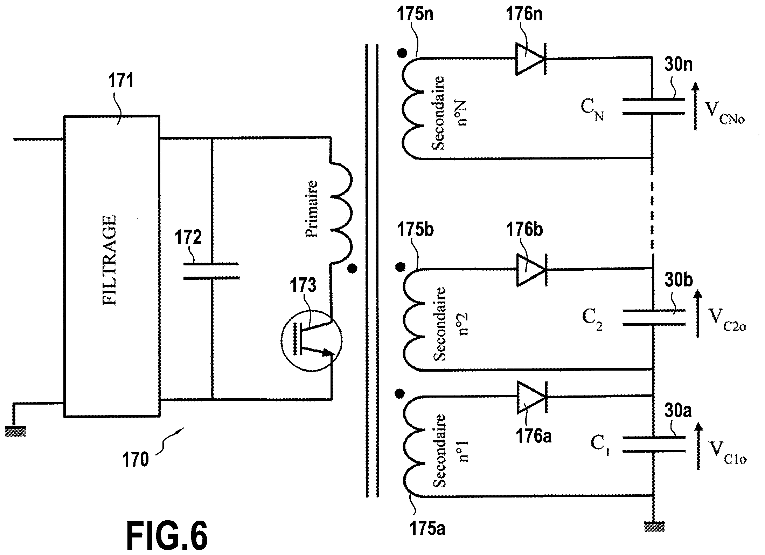

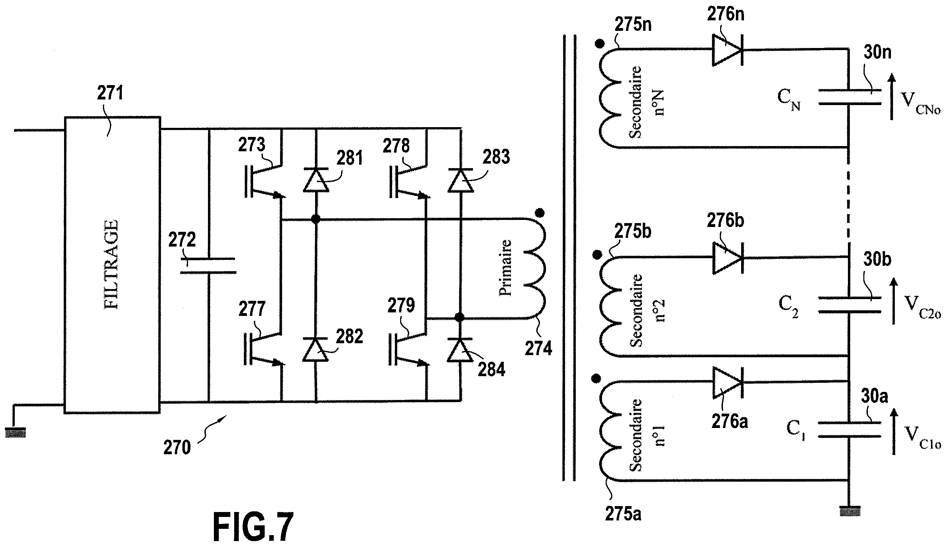

On a représenté sur les figures 6 et 7 deux exemples de fonctionnement du dispositif 70 d'équilibrage et de charge des cellules constituées par les éléments de stockage 30a, 30b, ..., 30n. Comme représenté sur la figure 1, le dispositif 70 d'équilibrage et de charge des cellules peut être alimenté à partir du réseau de bord 10 par une liaison 72 et peut être commandé de façon sélective par l'unité de commande 20 (liaison 71) dans les périodes situées en dehors de la réactivation d'urgence. Les dispositifs d'équilibrage et de charge décrits en référence aux figures 6 et 7 sont désignés respectivement par les références 170 et 270.

Le dispositif d'équilibrage et de charge de la figure 6, communément appelé structure à accumulation (ou « flyback » en anglais) comprend en entrée une unité de filtrage 171, suivie d'un condensateur 172 monté en parallèle avec un circuit comprenant un enroulement primaire 174 d'un transformateur et un organe électronique de commande 173. Un ensemble N d'enroulements secondaires 175a, 175b, ..., 175n de transformateur alimentent par l'intermédiaire de diodes de redressement 176a, 176b, ..., 176n un ensemble N d'éléments de stockage d'énergie électrique 30a, 30b, ..., 30n de manière à fournir aux bornes des différents éléments de stockage d'énergie électrique de capacités C₁, C₂, ...C_{N} des tensions V_{C10}, V_{C20}, ..., V_{CN0}.

Le dispositif d'équilibrage et de charge de la figure 7, communément appelé structure directe (ou « forward » en anglais), comprend en entrée une unité de filtrage 271, suivie d'un condensateur 272 monté en parallèle avec un circuit comprenant un ensemble de composants électroniques d'alimentation d'un enroulement primaire 274 d'un transformateur. Les composants électroniques peuvent comprendre un pont en H constitué de quatre diodes 281 à 284 et quatre organes électroniques de commande 273, 277, 278, 279. Un ensemble N d'enroulements secondaires 275a, 275b, ..., 275n de transformateur alimentent par l'intermédiaire de diodes de redressement 276a, 276b, ..., 276n un ensemble N d'éléments de stockage d'énergie électrique 30a, 30b, ..., 30n de manière à fournir aux bornes des différents éléments de stockage d'énergie électrique de capacités C₁, C₂, ..., C_{N} des tensions V_{C10}, V_{C20}, ..., V_{CN0}.

Le mode de réalisation de la figure 6, dont le primaire 174 du transformateur est considéré comme une source de courant, permet de faire un transfert énergétique avec un stockage de l'énergie au primaire. Ainsi on peut maîtriser l'énergie transférée aux secondaires 175a, 175b, ..., 175n du transformateur. Cette solution permet d'optimiser la masse de l'électronique de commande au détriment de la masse de l'élément inductif.

Le mode de réalisation de la figure 7, dont le primaire 274 du transformateur est considéré comme une source de tension, permet d'optimiser la taille de l'élément inductif au détriment de la l'électronique de commande. Le système selon l'invention est adapté pour assurer un redémarrage d'urgence en vol d'un turbomoteur en quelques secondes.

On notera que, avantageusement, la recharge des éléments de stockage 30a, 30b,..., 30n pouvant être effectuée au sol, les turbomoteurs étant en fonctionnement au ralenti pendant la phase de préparation de l'aéronef avant le décollage, le prélèvement d'énergie électrique correspondant peut être étalé sur une durée relativement longue (quelques dizaines de secondes à quelques minutes) sans impact opérationnel négatif, ce qui permet d'une part d'éviter de sur-dimensionner les éléments générateurs du réseau de bord, et d'autre part de diminuer la puissance pour laquelle sont dimensionnés les dispositifs de recharge tels que décrits sur les figure 6 et 7, et donc d'en limiter notablement la masse et le volume.

Les équipements additionnels du système selon l'invention sont très simples à mettre en oeuvre et sont très compacts. Ainsi, l'ensemble additionnel 30 d'éléments de stockage, l'unité de commande 20, le dispositif d'équilibrage 70 et le dispositif de décharge 40 peuvent être intégrés directement dans le compartiment moteur de la turbomachine.

L'invention se prête également à une mise en oeuvre sur des hélicoptères déjà en opération, dès lors que les modifications à apporter aux circuits existants sont simples à réaliser.

Selon l'invention, il est ainsi proposé de mettre en oeuvre un moyen technique pratique pour réaliser sur un hélicoptère bimoteur une fonction de redémarrage d'urgence (réactivation rapide) à partir d'un mode de veille. Selon l'invention, le démarreur électrique 60 d'une turbine est ainsi exploité en dehors de sa plage de fonctionnement nominale afin d'assouvir l'appel de puissance mécanique nécessaire au redémarrage d'urgence en vol.

## Revendications

1. Aéronef comprenant une turbomachine ayant un système de réactivation rapide, comprenant une machine électrique (60) alimentée en courant continu à partir d'un réseau de bord d'alimentation électrique (10) inclus dans ledit aéronef, **caractérisé en ce qu'**il comprend en outre un interrupteur (50) interposé entre le réseau de bord d'alimentation électrique (10) et la machine électrique (60), ledit interrupteur (50) étant ouvert pour assurer l'isolement de la machine électrique (60) par rapport au réseau de bord d'alimentation électrique (10) lorsque la réactivation d'urgence est sélectionnée, un ensemble additionnel (30) comprenant une pluralité N d'éléments de stockage d'énergie électrique (30a,..., 30n) et une unité de commande (20) adaptée pour commander un dispositif (40) de décharge des éléments de stockage d'énergie électrique (30a,..., 30n), le dispositif (40) de décharge des éléments de stockage d'énergie électrique (30a,..., 30n), étant incorporé dans l'aéronef et adapté pour permettre la mise en parallèle avec le réseau de bord d'alimentation électrique (10) d'un circuit série comprenant une partie au moins des N éléments de stockage d'énergie électrique (30a,..., 30n), la tension aux bornes de la machine électrique (60) étant configurée par commutation séquentielle du nombre des N éléments de stockage (30a,..., 30n) pour accompagner l'augmentation de la force contre-électromotrice de la machine électrique (60) au fur et à mesure de l'augmentation de la vitesse du générateur de gaz associé à la turbomachine, de telle sorte que lorsque le système de réactivation rapide est en service, la machine électrique (60) soit alimentée par un niveau de tension au-dessus de celui de ses caractéristiques nominales.

2. Aéronef selon la revendication 1, **caractérisé en ce que** les éléments de stockage (30a,..., 30n) ont une impédance de source plus faible et une densité de puissance supérieure à celles du réseau de bord d'alimentation électrique (10).

3. Aéronef selon la revendication 1 ou la revendication 2, **caractérisé en ce que** les éléments de stockage (30a,..., 30n) sont de type super capacité (EDLC).

4. Aéronef selon la revendication 1 ou la revendication 2, **caractérisé en ce que** les éléments de stockage (30a,..., 30n) sont de type condensateur hybride (LIC).

5. Aéronef selon l'une quelconque des revendications 1 à 4, **caractérisé en ce que** l'unité de commande (20) est associée à un dispositif de charge et d'équilibrage (70) et à l'interrupteur (50) pour commander la charge des éléments de stockage (30a,...,30n) à partir de la machine électrique (60) fonctionnant en générateur électrique, en dehors des périodes de réactivation rapide.

6. Aéronef selon l'une quelconque des revendications 1 à 4, **caractérisé en ce que** l'unité de commande (20) est associée à un dispositif de charge et d'équilibrage (70) pour commander la charge des éléments de stockage (30a,..., 30n) à partir du réseau de bord d'alimentation électrique (10) en dehors des périodes de réactivation rapide.

7. Aéronef selon l'une quelconque des revendications 1 à 6, **caractérisé en ce qu'**il est constitué par un hélicoptère bimoteur.

8. Procédé de réactivation rapide pour une turbomachine d'aéronef comprenant une machine électrique (60), alimentée en courant continu à partir d'un réseau de bord d'alimentation électrique (10) inclus dans ledit aéronef, **caractérisé en ce que** le procédé comprend les étapes consistant à interrompre de façon sélective la liaison électrique entre ledit réseau de bord d'alimentation électrique (10) et ladite machine électrique (60) à l'aide d'un interrupteur (50) qui est en position ouverte pour assurer l'isolement de la machine électrique (60) par rapport au réseau de bord d'alimentation électrique (10) lorsque la réactivation d'urgence est sélectionnée, et assurer à l'aide d'une unité de commande (20) et d'un dispositif de décharge des éléments de stockage (40) la mise en parallèle avec le réseau de bord d'alimentation électrique (10) d'un circuit série comprenant une partie au moins de N éléments de stockage d'énergie électrique (30a,..., 30n), la tension aux bornes de la machine électrique (60) étant configurée par commutation séquentielle du nombre des N éléments de stockage (30a,..., 30n) pour accompagner l'augmentation de la force contre-électromotrice de la machine électrique (60) au fur et à mesure de l'augmentation de la vitesse du générateur de gaz associé à la turbomachine, de telle sorte que, lorsque le système de réactivation rapide est en service, la machine électrique (60) soit alimentée par un niveau de tension au-dessus de celui de ses caractéristiques nominales.

9. Procédé de réactivation rapide selon la revendication 8, **caractérisé en ce qu'**il comprend en outre une étape de commande de la charge des éléments de stockage (30a,..., 30n), par un dispositif de charge et d'équilibrage (70), à partir du réseau de bord d'alimentation électrique (10), en dehors des périodes de réactivation rapide.

10. Procédé de réactivation rapide selon la revendication 8, **caractérisé en ce qu'**il comprend en outre une étape de commande de la charge des éléments de stockage (30a,..., 30n), par un dispositif de charge et d'équilibrage (70) et de l'interrupteur (50), à partir de la machine électrique (60) fonctionnant en générateur électrique, en dehors des périodes de réactivation rapide.

## Patentansprüche

1. Luftfahrzeug mit einer Turbomaschine, die ein System zur schnellen Reaktivierung aufweist, umfassend eine elektrische Maschine (60), die mittels eines Bordnetzes zur Stromversorgung (10), das in dem Luftfahrzeug enthalten ist, mit Gleichstrom versorgt wird, **dadurch gekennzeichnet, dass** es ferner einen Schalter (50), der zwischen dem Stromversorgungsbordnetz (10) und der elektrischen Maschine (60) eingefügt ist, wobei der Schalter (50) geöffnet ist, um die Trennung der elektrischen Maschine (60) von dem Stromversorgungsbordnetz (10) sicherzustellen, wenn die Notreaktivierung ausgewählt ist, eine zusätzliche Anordnung (30), welche eine Vielzahl N von Elementen zur Speicherung elektrischer Energie (30a,..., 30n) aufweist, sowie eine Steuereinheit (20) umfasst, welche dazu ausgelegt ist, eine Vorrichtung (40) zur Entladung der Elemente zur Speicherung elektrischer Energie (30a,..., 30n) zu steuern, wobei die Vorrichtung (40) zur Entladung der Elemente zur Speicherung elektrischer Energie (30a,..., 30n) in das Luftfahrzeug eingebaut und dazu ausgelegt ist, zu ermöglichen, eine Reihenschaltung, welche wenigstens einen Teil der N Elemente zur Speicherung elektrischer Energie (30a,..., 30n) umfasst, mit dem Stromversorgungsbordnetz (10) parallel zu schalten, wobei die Spannung an den Anschlüssen der elektrischen Maschine (60) durch sequentielles Umschalten der Anzahl der N Speicherungselemente (30a,..., 30n) konfiguriert wird, um die Erhöhung der gegenelektromotorischen Kraft der elektrischen Maschine (60) entsprechend der Erhöhung der Geschwindigkeit des der Turbomaschine zugeordneten Gasgenerators zu begleiten, derart, dass dann, wenn das System zur schnellen Reaktivierung in Betrieb ist, die elektrische Maschine (60) mit einem Spannungspegel, der oberhalb desjenigen seiner nominalen Kennlinien liegt, versorgt wird.

2. Luftfahrzeug nach Anspruch 1, **dadurch gekennzeichnet, dass** die Speicherungselemente (30a,..., 30n) eine geringere Quellenimpedanz und eine höhere Leistungsdichte als das Stromversorgungsbordnetz (10) aufweisen.

3. Luftfahrzeug nach Anspruch 1 oder Anspruch 2, **dadurch gekennzeichnet, dass** die Speicherungselemente (30a,..., 30n) vom Typ Superkapazität (EDLC) sind.

4. Luftfahrzeug nach Anspruch 1 oder Anspruch 2, **dadurch gekennzeichnet, dass** die Speicherungselemente (30a,..., 30n) vom Typ Hybridkondensator (LIC) sind.

5. Luftfahrzeug nach einem der Ansprüche 1 bis 4, **dadurch gekennzeichnet, dass** die Steuereinheit (20) einer Lade- und Ausgleichsvorrichtung (70) und einem Schalter (50) zugeordnet ist, um die Ladung der Speicherungselemente (30a,..., 30n) mittels der elektrischen Maschine (60), die als elektrischer Generator arbeitet, außerhalb der Zeiten schneller Reaktivierung zu steuern.

6. Luftfahrzeug nach einem der Ansprüche 1 bis 4, **dadurch gekennzeichnet, dass** die Steuereinheit (20) einer Lade- und Ausgleichsvorrichtung (70) zugeordnet ist, um die Ladung der Speicherungselemente (30a,..., 30n) anhand des Stromversorgungsbordnetzes (10) außerhalb der Zeiten schneller Reaktivierung zu steuern.

7. Luftfahrzeug nach einem der Ansprüche 1 bis 6, **dadurch gekennzeichnet, dass** es von einem zweimotorigen Helikopter gebildet ist.

8. Verfahren zur schnellen Reaktivierung für eine Turbomaschine eines Luftfahrzeugs, umfassend eine elektrische Maschine (60), die mittels eines Bordnetzes zur Stromversorgung (10), das in dem Luftfahrzeug enthalten ist, mit Gleichstrom versorgt wird, **dadurch gekennzeichnet, dass** das Verfahren die Schritte umfasst, die darin bestehen, die elektrische Verbindung zwischen dem Stromversorgungsbordnetz (10) und der elektrischen Maschine (60) mit Hilfe eines Schalters (50), welcher sich in geöffneter Stellung befindet, um die Trennung der elektrischen Maschine (60) von dem Stromversorgungsbordnetz (10) sicherzustellen, wenn die Notreaktivierung ausgewählt ist, selektiv zu unterbrechen, und mit Hilfe einer Steuereinheit (20) und einer Vorrichtung zur Entladung der Speicherungselemente (40) das Parallelschalten einer Reihenschaltung, welche wenigstens einen Teil von N Elementen zur Speicherung elektrischer Energie (30a,..., 30n) umfasst, mit dem Stromversorgungsbordnetz (10) sicherzustellen, wobei die Spannung an den Anschlüssen der elektrischen Maschine (60) durch sequentielles Umschalten der Anzahl der N Speicherungselemente (30a,..., 30n) konfiguriert wird, um die Erhöhung der gegenelektromotorischen Kraft der elektrischen Maschine (60) entsprechend der Erhöhung der Geschwindigkeit des der Turbomaschine zugeordneten Gasgenerators zu begleiten, derart, dass dann, wenn das System zur schnellen Reaktivierung in Betrieb ist, die elektrische Maschine (60) mit einem Spannungspegel, der oberhalb desjenigen seiner nominalen Kennlinien liegt, versorgt wird.

9. Verfahren zur schnellen Reaktivierung nach Anspruch 8, **dadurch gekennzeichnet, dass** es ferner einen Schritt zur Steuerung des Ladens der Speicherungselemente (30a,..., 30n) durch eine Lade- und Ausgleichsvorrichtung (70) anhand des Stromversorgungsbordnetzes (10) außerhalb der Zeiten schneller Reaktivierung umfasst.

10. Verfahren zur schnellen Reaktivierung nach Anspruch 8, **dadurch gekennzeichnet, dass** es ferner einen Schritt zur Steuerung des Ladens der Speicherungselemente (30a,..., 30n) durch eine Lade- und Ausgleichsvorrichtung (70) und des Schalters (50) anhand der elektrischen Maschine (60), die als elektrischer Generator arbeitet, außerhalb der Zeiten schneller Reaktivierung umfasst.

## Claims

1. An aircraft having a turbine engine with a rapid reactivation system, the system comprising an electrical machine (60) that is DC powered from an on-board electrical power supply network (10) included in said aircraft, and the aircraft being **characterized in that** it further comprises a switch (50) interposed between the on-board electrical power supply network (10) and the electrical machine (60), said switch (50) being open to isolate the electrical machine (60) from the on-board electrical power supply network (10) when emergency reactivation is selected, an additional set (30) comprising a plurality of N electrical energy storage elements (30a, ..., 30n), and a control unit (20) adapted for controlling a device (40) for discharging the electrical energy storage elements (30a, ..., 30n), the device (40) for discharging the electrical energy storage elements (30a, ..., 30n) being incorporated in the aircraft and being adapted to enable a series circuit comprising at least some of the N electrical energy storage elements (30a, ..., 30n) to be connected in parallel with the on-board electrical power supply network (10), the voltage across the terminals of the electrical machine (60) being configured by sequentially switching the number of the N storage elements (30a, ..., 30n) so as to accompany the increase in the back-electromotive force from the electrical machine (60) progressively as the speed of the gas generator associated with the turbine engine increases in such a manner, that while the rapid reactivation system is in operation, the electrical machine (60) is powered by a voltage level above the level of its nominal characteristics.

2. An aircraft according to claim 1, **characterized in that** storage elements (30a, ..., 30n) have source impedance that is lower and power density that is higher than the source impedance and the power density of the on-board electrical power supply network (10).

3. An aircraft according to claim 1 or claim 2, **characterized in that** the storage elements (30a, ..., 30n) are of the electric double-layer capacitor (EDLC) supercapacitor type.

4. An aircraft according to claim 1 or claim 2, **characterized in that** the storage elements (30a, ..., 30n) are of the hybrid lithium capacitor (LIC) type.

5. An aircraft according to any one of claims 1 to 4, **characterized in that** the control unit (20) is associated with a device (70) for charging and balancing and with the switch (50) in order to control the charging of the storage elements (30a, ..., 30n) from the electrical machine (60) operating as an electricity generator, outside periods of rapid reactivation.

6. An aircraft according to any one of claims 1 to 4, **characterized in that** the control unit (20) is associated with a device (70) for charging and balancing to control the charging of the storage elements (30a, ..., 30n) from the on-board electrical power supply network (10), outside periods of rapid reactivation.

7. An aircraft according to any one of claims 1 to 6, **characterized in that** it is constituted by a twin-engined helicopter.

8. A rapid reactivation method for rapidly reactivating an aircraft turbine engine including an electrical machine (60) that is DC powered from an on-board electrical power supply network (10) included in said aircraft, the method being **characterized in that** it comprises the steps consisting in selectively interrupting the electrical connection between said on-board electrical power supply network (10) and said electrical machine (60) using a switch (50) that is in an open position in order to isolate the electrical machine (60) from the on-board electrical power supply network (10) when emergency reactivation is selected, and is using a control unit (20) and a device (40) for discharging storage elements to enable a series circuit comprising at least some of the N electrical energy storage elements (30a, ..., 30n) to be connected in parallel with the on-board electrical power supply network (10), the voltage across the terminals of the electrical machine (60) being configured by sequentially switching the number of the N storage elements (30a, ..., 30n) so as to accompany the increase in the back-electromotive force from the electrical machine (60) progressively as the speed of the gas generator associated with the turbine engine increases in such a manner that, while the rapid reactivation system is in operation, the electrical machine (60) is powered by a voltage level above the level of its nominal characteristics.

9. A rapid reactivation method according to claim 8, **characterized in that** it further includes a step of controlling the charging of the storage elements (30a, ..., 30n) by a charging and balancing device (70) from the on-board electrical power supply network (10), outside periods of rapid reactivation.

10. A rapid reactivation method according to claim 8, **characterized in that** it further comprises a step of controlling the charging of the storage elements (30a, ..., 30n) by means of a charging and balancing device (70) and the switch (50) from the electrical machine (60) operating as an electricity generator, outside periods of rapid reactivation.
